# EUROPEAN PATENT APPLICATION

(11) **EP 4 203 184 A1**
(43) Date of publication of application: **28.06.2023**
(21) Application number: 21881666.8
(22) Date of filing: 12.08.2021
(51) Int. Cl.: H01Q 1/38

(54) **RADIO DEVICE AND ELECTRONIC DEVICE**

(30) Priority: 19.10.2020 CN 202011118984
(71) Applicant: GUANGDONG OPPO MOBILE TELECOMMUNICATIONS CORP., LTD., Dongguan, Guangdong 523860 (CN)
(72) Inventor: ZHANG, Shengqiang, Dongguan, Guangdong 523860 (CN)
(74) Representative: Taor, Simon Edward William
(86) International application number: PCT/CN2021/112210
(87) International publication number: WO 2022/083247

(57) **Abstract**

Provided are an antenna device and an electronic device. The antenna device includes a coil and a first shielding member. The coil includes a first conductor section and a second conductor section that are opposite to each other. A transmission direction of a current in the first conductor section is reverse to a transmission direction of the current in the second conductor section. The first shielding member is disposed on a side of the coil. An orthographic projection of the first shielding member on the coil at least partially covers the second conductor section to weaken an intensity of a magnetic field generated by the second conductor section under the action of the current.

## Description

### CROSS-REFERENCE TO RELATED APPLICATIONS

This application claims priorities to Chinese Patent Application No. 202011118984.5, titled "ANTENNA DEVICE AND ELECTRONIC DEVICE" and filed with China National Intellectual Property Administration on October 19, 2020, the entire content of which is incorporated herein by reference.

### FIELD

The present disclosure relates to the field of communication technologies, and more particularly, to an antenna device and an electronic device.

### BACKGROUND

With the development of communication technology, electronic devices such as smartphones have versatile functions, and the communication modes of the electronic devices are also increasingly diversified. For example, the electronic devices can gradually realize Near Field Communication (NFC) recently.

However, with the development of electronic technology, the electronic devices become smaller and thinner, and thus they have limited internal space, thereby limiting a volume of an NFC antenna.

### SUMMARY

Embodiments of the present disclosure provide an antenna device and an electronic device, and the antenna device can be miniaturized.

In a first aspect, an embodiment of the present disclosure provides an antenna device. The antenna device includes a coil and a first shielding member. The coil at least includes a first conductor section and a second conductor section that are opposite to each other. A transmission direction of a current in the first conductor section being reverse to a transmission direction of the current in the second conductor section. The first shielding member is disposed on a first side of the coil. An orthographic projection of the first shielding member on the coil at least partially covers the second conductor section to weaken an intensity of a magnetic field generated by the second conductor section under the action of the current.

In a second aspect, an embodiment of the present disclosure provides an electronic device. The electronic device includes an antenna device and a circuit board. The antenna device includes a coil and a first shielding member. The coil at least includes a first conductor section and a second conductor section that are opposite to each other. A transmission direction of a current in the first conductor section being reverse to a transmission direction of the current in the second conductor section. The first shielding member is disposed on a first side of the coil. An orthographic projection of the first shielding member on the coil at least partially covers the second conductor section to weaken an intensity of a magnetic field generated by the second conductor section under the action of the current. The circuit board is located on a side of the first shielding member facing away from the coil and has a signal source disposed thereon. The signal source is electrically connected to the coil to enable the coil to transmit a wireless signal.

### BRIEF DESCRIPTION OF THE DRAWINGS

In order to clearly explain technical solutions of embodiments of the present disclosure, drawings used in the embodiments will be briefly described below Obviously, the drawings as described below are merely some embodiments of the present disclosure. Based on these drawings, other drawings can be obtained by those skilled in the art without inventive effort.
FIG. 1 is a first schematic structural diagram of an electronic device according to an embodiment of the present disclosure.
FIG. 2 is a first schematic structural diagram of an antenna device according to an embodiment of the present disclosure.
FIG. 3 is a schematic diagram of a coil shown in FIG. 2 generating a first magnetic field.
FIG. 4 is a schematic diagram of a coil shown in FIG. 2 generating a second magnetic field.
FIG. 5 is a second schematic structural diagram of an antenna device according to an embodiment of the present disclosure.
FIG. 6 is a first schematic structural diagram of a coil shown in FIG. 2.
FIG. 7 is a second schematic structural diagram of a coil shown in FIG. 2.
FIG. 8 is a third schematic structural diagram of an antenna device according to an embodiment of the present disclosure.
FIG. 9 is a second schematic structural diagram of an electronic device according to an embodiment of the present disclosure.
FIG. 10 is a third schematic structural diagram of an electronic device according to an embodiment of the present disclosure.
FIG. 11 is a fourth schematic structural diagram of an electronic device according to an embodiment of the present disclosure.
FIG. 12 is a fifth schematic structural diagram of an electronic device according to an embodiment of the present disclosure.

### DETAILED DESCRIPTION

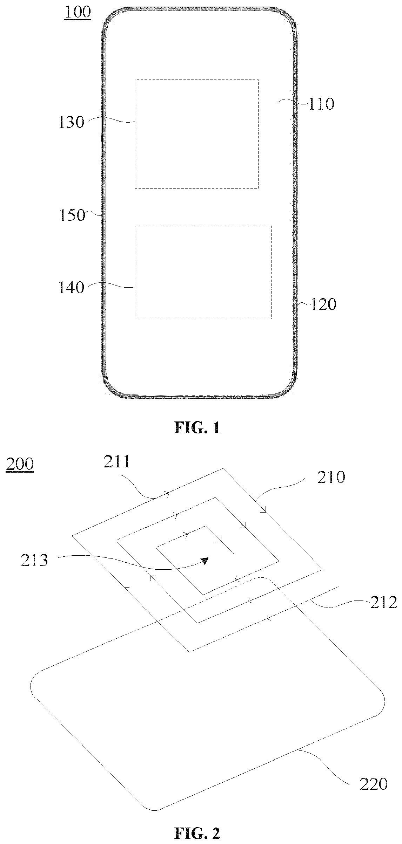

The technical solutions in the embodiments of the present disclosure will be clearly and thoroughly described below with reference to the FIG. 1 to FIG. 12 in the embodiments of the present disclosure. Apparently, the described embodiments are only some of, rather than all of the embodiments of the present disclosure. Based on the embodiments in the present disclosure, all other embodiments obtained by those skilled in the art without inventive work fall within the protection scope of the present disclosure.

An embodiment of the present disclosure provides an electronic device. The electronic device may be a smartphone, a tablet computer, a game device, an Augmented Reality (AR) device, a car device, a data storage device, an audio playback device, a video playback device, a notebook computer, or a desktop computing device, etc. FIG. 1 is a first schematic structural diagram of an electronic device according to an embodiment of the present disclosure. Referring to FIG. 1, the electronic device 100 includes a display screen 10, a middle frame 20, a circuit board 30, a battery 40, and a rear housing 150.

The display screen 10 is disposed on the middle frame 20 to form a display surface of the electronic device 100. The display surface is configured to display information such as images and text. The display screen 10 may include a screen such as a Liquid Crystal Display (LCD) screen or an Organic Light-Emitting Diode (OLED) screen.

It can be understood that the display screen 110 may be full screen display. In this case, an entire region of the display screen 110 is a display region and has no non-display region, or the display screen 110 has a non-display region only occupying a small region for a user. In this way, the display screen 110 has a great screen-to-body ratio. Alternatively, the display screen 110 may also be a non-full screen display. In this case, the display screen 110 includes a display region, and a non-display region adjacent to the display region. The display region is configured to display information, and the non-display region displays no information.

It can be understood that a cover plate (not shown in FIG. 1) may also be provided on the display screen 10 to protect the display screen 10 from being scratched or damaged by water. The cover plate may be a transparent glass cover plate, allowing the user to observe the content displayed on the display screen 10 through the cover plate. It can be understood that the cover plate may be a glass cover plate made of sapphire.

The middle frame 120 can be a sheet-like structure or a laminar structure, or it can be a hollow frame structure. The middle frame 120 provides support for electronic components or functional components in the electronic device 100, thereby enabling the electronic components and functional components of the electronic device 100 to be mounted together. For example, the middle frame 120 may have structures such as grooves, protrusions, and through holes, to facilitate installation of the electronic components or the functional components of the electronic device 100. It can be understood that the middle frame 120 may be made of a material such as metal or plastic.

The circuit board 130 may be fixedly disposed on the middle frame 120, and the circuit board 130 may be sealed inside the electronic device 100 by the rear housing 150. The circuit board 130 may be a main board of the electronic device 100. One or more of functional components such as a processor, an earphone interface, an acceleration sensor, a gyroscope, and a motor may be integrated on the circuit board 130. Meanwhile, the display screen 110 may be electrically connected to the circuit board 130, and thus, the display of the display screen 110 can be controlled by the processor on the circuit board 130.

The battery 140 is disposed on the middle frame 120 and sealed inside the electronic device 100 by the rear housing 150. The battery 140 is electrically connected to the circuit board 130, enabling the battery 140 to supply power to the electronic device 100. A power management circuit may be provided on the circuit board 130. The power management circuit is configured to distribute the voltage provided by the battery 140 to respective electronic components in the electronic device 100.

The rear housing 150 is connected to the middle frame 120. For example, the rear housing 150 may be attached to the middle frame 120 by an adhesive such as a double-faced adhesive tape, to achieve a connection to the middle frame 120. The rear housing 150 is configured to, together with the middle frame 120 and the display screen 110, seal the electronic components and functional components of the electronic device 100 inside the electronic device 100, thereby having a protecting function for the electronic components and functional components of the electronic device 100.

An antenna device may be further provided in the electronic device 100. The antenna device is configured to implement a wireless communication function of the electronic device 100. For example, the antenna device can be configured to implement an NFC function. The antenna device is disposed inside a housing of the electronic device. It can be understood that some components of the antenna device, for example, a signal processing chip and a signal processing circuit in the antenna device, can be integrated on the circuit board 130, to realize an electrical connection between the antenna device and the circuit board 130. In addition, some components of the antenna device 200 may be directly disposed inside the electronic device 100. For example, a radiator or a structure of a conductor of the antenna device can be directly disposed on an inner surface of the rear housing 150.

FIG. 2 is a first schematic structural diagram of an antenna device according to an embodiment of the present disclosure. Referring to FIG. 2, the antenna device 200 includes a coil 210 and a first shielding member 220.

The coil 210 may be formed by winding a conductor around a center of rotation of the coil 210. The coil 210 may include a first conductor section 211 and a second conductor section 212 that are arranged opposite to each other. The opposite arrangement may refer to that the first conductor section 211 and the second conductor section 212 are located at two sides of the center of rotation, respectively. A central region 213 is defined between the first conductor section 211 and the second conductor section 212. When the coil 210 generates a magnetic field under the action of a changing current, magnetic lines of force of the magnetic field can penetrate the central region 213.

It can be understood that a transmission direction of a current in the first conductor section 211 is reverse to a transmission direction of the current in the second conductor section 212. For example, as illustrated in FIG. 2, when a transmission direction of the current in the coil 210 is clockwise, a transmission direction of the current in the first conductor section 211 is from left to right, and a transmission direction of the current in the second conductor section 212 is from right to left, i.e., the two transmission directions are opposite. For another example, when the transmission direction of the current in the coil 210 is counterclockwise, the transmission direction of the current in the first conductor section 211 is from right to left, and the transmission direction of the current in the second conductor section 212 is from left to right, i.e., the two transmission directions are opposite.

It can be understood that FIG. 2 merely illustrates an example of the first conductor section 211 and the second conductor section 212 according to an embodiment of the present disclosure. For example, the first conductor section 211 according to an embodiment of the present disclosure may be a left-side vertical conductor in the coil 210 in FIG. 2, and the second conductor section 212 may be a right-side vertical conductor in the coil 210 in FIG. 2. In this case, a flow direction of the current in the first conductor section 211 is also reverse to a flow direction of the current in the second conductor section 212. Therefore, any two conductor sections that are opposite to each other in the coil 210 and have reverse flow directions of the current therein can be the first conductor section 211 and the second conductor section 212 in an embodiment of the present disclosure. The first conductor section 211 and the second conductor section 212 in the embodiments of the present disclosure are not limited to the above examples.

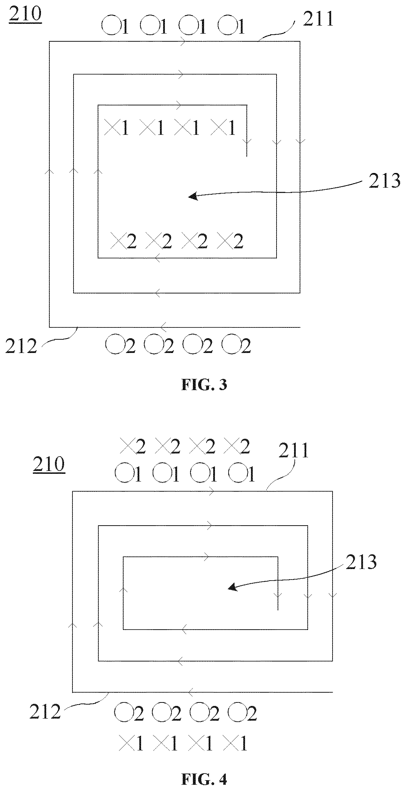

When a width of the central region 213 is relatively large, i.e., when a distance between the first conductor section 211 and the second conductor section 210 is relatively large, magnetic fields generated by the first conductor section 211 and the second conductor section 212 in the central region 213 have same directions and can be mutually enhanced. As an example, with reference to FIG. 2 and FIG. 3, the transmission direction of the current in the coil 210 is clockwise, and a schematic diagram of a first magnetic field generated by the coil 210 shown in FIG. 2 is illustrated in FIG. 3.

As illustrated in FIG. 3, when the transmission direction of the current in the coil 210 is clockwise, the transmission direction of the current in the first conductor section 211 is from left to right. In this case, according to Ampere's rule, a magnetic line of force, in the central region 213, of the first conductor section 211 is in a direction from the outside to the inside (indicated by "×1" in FIG. 3), and a magnetic line of force, located outside the central region 213 and facing away from a side of the second conductor section 212, of the first conductor section 211 is in a direction from the inside to the outside (indicated by "∘1" in FIG. 3). Similarly, the transmission direction of the current in the second conductor section 212 is from right to left. In this case, according to the Ampere's rule, a magnetic line of force, in the central region 213, of the second conductor section 212 is in a direction from the outside to the inside (indicated by "×2" in FIG. 3), and a magnetic line of force, located outside the central region 213 and facing away from a side of the first conductor section 211, of the second conductor section 212 is in a direction from the inside to the outside (indicated by "o2" in FIG. 3). Therefore, in the central region 213, the magnetic lines of force of the first conductor section 211 and the second conductor section 212 are both in the direction from the outside to the inside, i.e., in the same direction, and thus the magnetic fields generated by the first conductor section 211 and the second conductor section 212 can be mutually enhanced.

When the width of the central region 213 is relatively small, i.e., when the distance between the first conductor section 211 and the second conductor section 210 is relatively small, the magnetic fields generated by the first conductor section and the second conductor section 212 have reverse directions and can be mutually inhibited. As an example, with reference to FIG. 2 and FIG. 4, the transmission direction of the current in the coil 210 is clockwise, and a schematic diagram of a second magnetic field generated by the coil 210 shown in FIG. 2 is illustrated in FIG. 4.

As illustrated in FIG. 4, when the transmission direction of the current in the coil 210 is clockwise, the transmission direction of the current in the first conductor section 211 is from left to right. In this case, according to the Ampere's rule, a magnetic line of force, close to a side of the second conductor section 212, of the first conductor section 211 is in a direction from the outside to the inside (indicated by "×1" in FIG. 4), and a magnetic line of force, facing away from a side of the second conductor section 212, of the first conductor section 211 is in a direction from the inside to the outside (indicated by "∘1" in FIG. 4). Similarly, the transmission direction of the current in the second conductor section 212 is from right to left. In this case, according to the Ampere's rule, a magnetic line of force, close to the first conductor section 211, of the second conductor section 212 is in a direction from the outside to the inside (indicated by "×2" in FIG. 4), and a magnetic line of force, facing away from a side of the first conductor section 211, of the second conductor section 212 is in a direction from the inside to the outside (indicated by "∘2" in FIG. 4). Therefore, in a region where the first conductor section 211 is located, the magnetic lines of force of the first conductor section 211 and the second conductor section 212 are in reverse directions; and in a region where the second conductor section 212 is located, the magnetic lines of force of the first conductor section 211 and the second conductor section 212 are also in reverse directions, so that the magnetic fields generated by the first conductor section 211 and the second conductor section 212 can be mutually inhibited.

In order to miniaturize the electronic device 100, space occupied by the antenna device 200 becomes increasingly smaller, and at the same time, a volume of the antenna device 200 becomes also increasingly smaller. However, when the distance between the first conductor section 211 and the second conductor section 212 of the coil 210 is reduced, as illustrated in FIG. 4, a problem of mutual inhibition of the magnetic fields generated by the first conductor section 211 and the second conductor section 212 may occur.

In this regard, the first shielding member 220 may be disposed on a side of the coil 210, and an orthographic projection of the first shielding member 220 on the coil 210 at least partially covers the second conductor section 212. When the magnetic lines of force from the inside to the outside or from the outside to the inside are generated by the second conductor section 212 under the action of the current, most of the magnetic lines of force (there are a small number of magnetic lines of force radiated into free space from a region which is not blocked by the second conductor section 212) cannot penetrate the first shielding member 220. Therefore, when the width of the central region 213 of the coil 210 is relatively small, the second conductor section 212 does not generate a magnetic field that inhibits the magnetic field of first conductor section 211.

With the antenna device 200 according to the embodiments of the present disclosure, the orthographic projection of the first shielding member 220 on the coil 210 at least partially covers the second conductor section 212, and the first shielding member 220 can weaken an intensity of a magnetic field generated by the second conductor section 212 under the action of the current. In this case, the width of the central region 213 of the coil 210 can be reduced, a spacing between the first conductor section 211 and the second conductor section 212 is relatively small, a region occupied by the coil 210 can be reduced, and the first shielding member 220 can weaken an inhibiting effect of the second conductor section 212 on the magnetic field of the first conductor section 211. In this way, the radiation performance of the entire coil 210 can be guaranteed, and the coil 210 and the antenna device 200 can also be miniaturized

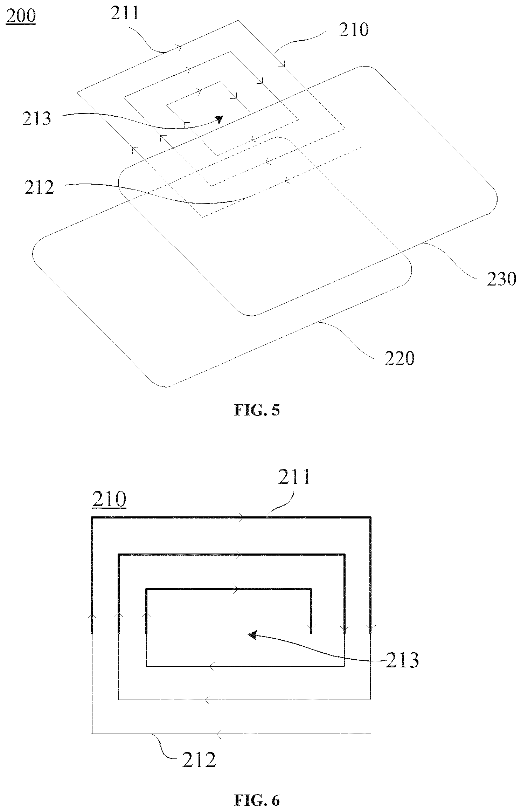

FIG. 5 is a second schematic structural diagram of an antenna device according to an embodiment of the present disclosure. Referring to FIG. 5, the antenna device further includes a second shielding member 230. The second shielding member 230 may be disposed on another side of the coil 210. That is, the first shielding member 220 and the second shielding member 230 may be disposed on two opposite sides of the coil 210.

An orthographic projection of the second shielding member 230 on the coil 210 at least partially covers the second conductor section 212. When magnetic lines of force from the inside to the outside or from the outside to the inside are generated by the second conductor section 212 under the action of the current, most of the magnetic lines of force cannot penetrate the first shielding member 220 and the second shielding member 230 at the same time. Therefore, when the central region 213 of the coil 210 is relatively small, the second conductor section 212 does not generate a magnetic field that inhibits the magnetic field of first conductor section 211, and thus the second shielding member 230 can further weaken the intensity of the magnetic field generated by the second conductor section 212 under the action of the current.

In addition, in actual products, in the coil 210 according to the embodiments of the present disclosure, a shortest distance between the first conductor section 211 and the second conductor section 212 may be between 2 mm and 10 mm. It can be understood that when the first conductor section 211 and the second conductor section 212 are single-turn coil conductors, the shortest distance may be a distance between two turns of coil conductor; and when the first conductor section 211 and the second conductor section 212 are multi-turn coil conductors, the shortest distance may be a distance between a turn of coil conductor in the first conductor section 211 closest to the second conductor section 212 and a turn of coil conductor in the second conductor section 212 closest to the first conductor section 211. It can be understood that the shortest distance may be a width of a central region 213 defined between the first conductor section 211 and the second conductor section 212. The coil 210 according to the embodiments of the present disclosure can greatly reduce an area occupied by the coil 210.

In the description of the present disclosure, it should be understood that terms such as "first", "second", and the like are only used to distinguish similar objects, and cannot be interpreted as indicating or implying relative importance or implying the number of indicated features.

FIG. 6 is a first schematic structural diagram of the coil shown in FIG. 2. Referring to FIG. 2 and FIG. 6, in the coil 210 according to the embodiment of the present disclosure, a radial width of the second conductor section 212 is different from a radial width of the first conductor section 211. It can be understood that the radial width is a dimension always correspondingly accompanied with another dimension of an axial length. The axial length refers to a length between two free ends of the coil. The radial width may refer to a cross-sectional diameter of the coil conductor in radial section.

It can be understood that the radial width of the first conductor section 211 may be greater than the radial width of the second conductor section 212, or the radial width of the second conductor section 212 may be greater than the radial width of the first conductor section 211, to further reduce the area occupied by the coil 210.

It can be understood that the radial width may refer to a radial width of a single turn of the coil when each turn of conductor in the first conductor section 211 has the same radial width and each turn of conductor in the second conductor section 212 has the same radial width. In this case, the radial width of a single turn of conductor in the second conductor section 212 may be different from that in the first conductor section 211.

It can be understood that, when multiple turns of conductors in the first conductor section 211/the second conductor section 212 have different radial widths, the radial width may refer to an average radial width of the multiple turns of conductors. In this case, the average radial width of the second conductor section 212 may be different from the average radial width of the first conductor section 211.

It can be understood that a spacing between two adjacent turns of conductors in the first conductor section 211 may be equal to a spacing between two adjacent turns of conductors in the second conductor section 212. Therefore, when the radial width of the second conductor section 212 is different from the radial width of the first conductor section 211, an area occupied by the first conductor section 211 is different from an area occupied by the second conductor section 212, thereby reducing the area occupied by the entire coil 210.

It can be understood that the spacing between the two adjacent turns of conductors in the first conductor section 211 may be different from the spacing between the two adjacent turns of conductors in the second conductor section 212. For example, the spacing between the two adjacent turns of conductors in the second conductor section 212 is smaller than the spacing between the two adjacent turns of conductors in the first conductor section 211, and thus the second conductor section 212 occupies a smaller area, which is conducive to the shielding of the first shielding member 220 and the second shielding member 230.

According to an embodiment of the present disclosure, the radial width of the second conductor section 212 is different from the radial width of the first conductor section 211. Compared with the solution that the radial width of the second conductor section 212 is equal to the radial width of the first conductor section 211, this embodiment allows the radial width of the second conductor section 212 or the radial width of the first conductor section 211 to be smaller, and thus the area occupied by the coil 210 is smaller.

Moreover, with a certain intensity of the current flowing through the conductor, a density of generated magnetic lines of force is greater with a decrease in the radial width of the conductor. Therefore, when the radial width of the first conductor section 211 is smaller than the radial width of the second conductor section 212, the density of magnetic lines of force generated by the first conductor section 211 is greater, and thus the magnetic field generated by the first conductor section 211 is stronger, enabling the first conductor section 211 to better sense an object in a region where the magnetic field thereof is located. When the radial width of the second conductor section 212 is smaller than the radial width of the first conductor section 211, the density of magnetic lines of force generated by the second conductor section 212 is greater. When the orthographic projections of the first shielding member 220 and the second shielding member 230 on the coil 210 cover the second conductor section 212, the first shielding member 220 and the second shielding member 230 can more easily shield the dense magnetic lines of force, and the first shielding member 220 and the second shielding member 230 can more easily weaken the intensity of the magnetic field generated by the second conductor section 212 under the action of the current.

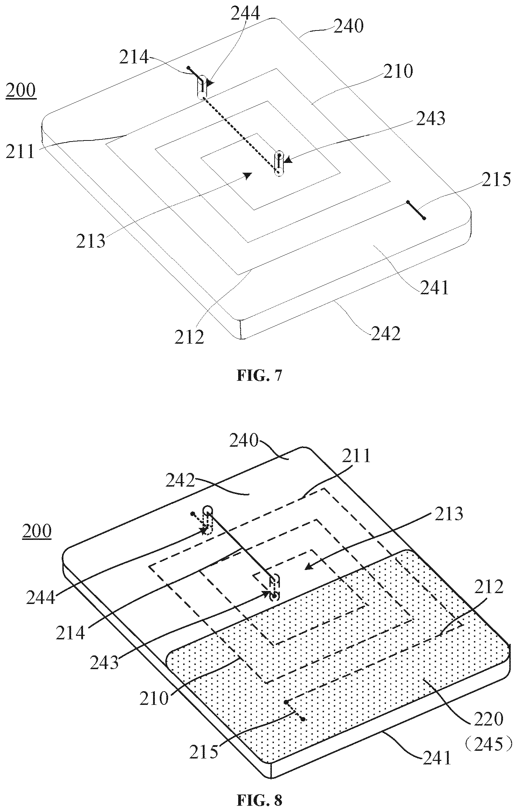

FIG. 7 is a second schematic structural diagram of an antenna device according to an embodiment of the present disclosure. With reference to FIG. 2 and FIG. 7, in the embodiment of the present disclosure, the antenna device 200 may further include a substrate 240, a first electrical connection member 214, and a second electrical connection member 215.

The substrate 240 can be configured to carry or form the coil 210. The substrate may include a first surface 241 and a second surface 242 that are opposite to each other. The coil 210 may be disposed on one of the first surface 241 and the second surface 242, for example, on the first surface. The first electrical connection member 214 may be disposed on the first surface 241 and the second surface 242. The second electrical connection member 215 may be disposed on one of the first surface 241 and the second surface 242, for example, on the first surface. For example, in FIG. 6, the first conductor section 211 and the second conductor section 212 of the coil 210, the second electrical connection member 215, and most of the first electrical connection members 214 are disposed on the first surface 241, while a small part of the first electrical connection members 214 are disposed on the second surface 242.

The first electrical connection member 214 has an end electrically connected to one free end of the coil 210, and another end electrically connected to other devices such as a power source and a control chip, to input or output a current signal from the free end.

The second electrical connection member 215 has an end electrically connected to the other free end of the coil 210, and another end electrically connected to other devices such as the power source, the control chip, and a ground plane, to input or output the current signal from the free end.

In a process of winding the coil 210 around the center of rotation, one free end of the coil 210 is necessarily located in the central region 213, enabling the free end to be not electrically connected to the external device. In this case, at least two via holes, for example, a first via hole 243 and a second via hole 244, may be provided on the substrate 240 at intervals. The two via holes both penetrate through the first surface 241 and the second surface 242 of the substrate 240.

It can be understood that each of the via holes may penetrate the first surface 241 and the second surface 242 of the substrate 240 to simplify the processing of the via holes.

It can be understood that each via hole may turn or extend in a deflected direction once, or turn or extend in deflected directions multiple times, to form a curved hole. When the first electrical connection member 214 penetrates the via hole, positions of the first electrical connection member 214 on the first surface 241 and the second surface 242 may be flexibly set.

One end of the first electrical connection member 214 may be electrically connected to a free end of the coil 210 located in the central region 213, and the other end of first electrical connection member 214 may successively pass through the respective via holes. For example, the other end of the first electrical connection member 214 may be disposed on the first surface 241; it may first pass through the first via hole 243 from the first surface 241 to be disposed on the second surface 242, it may then extend into the second via hole 244 on the second surface 242, and finally extend to the first surface 241 through the second via hole 244. In this case, the other end of the first electrical connection member 214 extending out of the second via hole 244 can be disposed outside the central region 213 by appropriately set the positions of the first via hole 243 and the second via hole 244, thereby facilitating an electrical connection of the first electrical connection member 214 to other devices.

In the antenna device 200 according to the embodiments of the present disclosure, at least two via holes are provided on the substrate 240, and the other end of the first electrical connection member 214 may be located in a central region 213 of the first surface 241 by passing through multiple via holes, which facilitates an electrical connection between the coil 210 and other devices.

The coil 210 may be directly or indirectly connected onto the substrate 240, for example, connected the first surface 241 and the second surface 242 of the substrate 240 by the adhesive; or the coil 210 may also be directly formed on the substrate 240.

For example, a metal layer such as a copper or iron plating layer may be attached on the first surface 241 and the second surface 242 of the substrate 240. The first conductor section 211, the second conductor section 212, the first electrical connection member 214, and the second electrical connection member 215 may be formed on the first surface 241 and the second surface 242 of the substrate 240 by etching. For example, on the first surface 241 of the substrate 240, a portion of the metal plating layer corresponding to the portion of the first conductor section 211, the second conductor section 212, the second electrical connection member 215, and the first electrical connection member 214 located on the first surface 241 can be retained, and the remaining portion of the metal plating layer other than the above-mentioned portion can be etched away. In this case, the portion of the first conductor section 211, the second conductor section 212, the second electrical connection member 215, and the first electrical connection member 214 located on the first surface 241 can be formed on the first surface 241. Similarly, on the second surface 242 of the substrate 240, a portion of the metal plating layer corresponding to the portion of the first electrical connection member 214 located on the second surface 242 can be retained, and the reminding portion of the metal plating layer can be etched away. In this way, the portion of the first electrical connection member 214 located on the second surface 242 can be formed on the second surface 242.

It can be understood that, in the above solution, a portion of the first electrical connection member 214 located in the via hole can be formed by providing a plating layer in the via hole.

It can be understood that the substrate 240 itself may be an insulating substrate 240, such as a dielectric substrate 240. When the coil 210 is formed on the substrate 240, the first surface and the second surface of the substrate 240 may be plated with the metal layers, and the above solution may be formed based on a specific structure of the coil 210.

In the antenna device 200 according to the embodiments of the present disclosure, the coil 210, the first electrical connection member 214, and the second electrical connection member 215 can be etched on the first surface 241 and the second surface 242 of the substrate 240 by fully using the metal plating layers on the substrate 240. The coil 210 is formed on a surface of the substrate 240 without additionally increasing a thickness of the antenna device 200 and a thickness of the electronic device 100. In this way, the antenna device 200 and the electronic device 100 can be lighter and thinner.

In order to further reduce the thickness of the antenna device 200 and the thickness of the electronic device 100, the first shielding member 220 or the second shielding member 230 may be formed on the substrate 240. FIG. 8 is a third schematic structural diagram of an antenna device according to an embodiment of the present disclosure. For example, referring to FIG. 8, when the first conductor section 211 and the second conductor section 212 are disposed on the first surface 241 of the substrate 240, the second surface 242 of the substrate 240 may include the metal layer 245. The first shielding member 220 or the second shielding member 230 may be formed by the metal layer 245. For example, the first shielding member 220 is formed by the metal layer 245, as illustrated in FIG. 8.

It can be understood that the metal layer 245 may be a metal plating layer on the second surface 242 of the substrate 240. That is, when forming the portion of the first electrical connection member 214 located on the second surface 242 by etching, a portion of the metal plating layer at a region corresponding to the second conductor section 212 (for example, a lower region of the second surface 242) can be retained to form the first shielding member 220 or the second shielding member 230.

It should be noted that the region corresponding to the second conductor section 212 not only refers to an orthographic projection region of each turn of the second conductor section 212 on the second surface 242, but also refers to an orthographic projection region of a spacing region between any adjacent turns of the second conductor section 212 on the second surface 242.

In the antenna device 200 according to the embodiments of the present disclosure, the first shielding member 220/the second shielding member 230 are formed by using the metal layer 245 on the second surface 242 of the substrate 240. On one hand, a material of the metal layer 245 can be reasonably utilized to reduce the waste of the material; on the other hand, the first shielding member 220/the second shielding member 230 do not additionally increase the thickness of the antenna device 200, which enables the antenna device 200 and the electronic device 100 to be lighter and thinner.

The first shielding member 220/the second shielding member 230 formed on the second surface 242 may be disposed around a portion of the first electrical connection member 214 disposed on the second surface 242. That is, the portion of the first electrical connection member 214 disposed on the second surface 242 and the first shielding member 220/the second shielding member 230 formed on the second surface 242 may be a concentric ring structure. The portion of the first electrical connection member 214 disposed on the second surface 242 may be disposed on an inner ring, and the first shielding member 220/the second shielding member 230 formed on the second surface 242 may be disposed on an outer ring. The first electrical connection member 214 is insulated from the first shielding member 220/the second shielding member 230. In this case, the first shielding member 220/the second shielding member 230 has no response to the performance of the first electrical connection member 214, without affecting radiation performance of the antenna device 200.

The portion of the first electrical connection member 214 disposed on the second surface 242 may not overlap with the first shielding member 220/the second shielding member 230 formed on the second surface 242. That is, for example, as illustrated in FIG. 8, the portion of the first electrical connection member 214 disposed on the second surface 242 and the first shielding member 220/the second shielding member 230 formed on the second surface 242 are staggered to each other or spaced apart from each other. In this case, on one hand, the portion of the first electrical connection member 214 on the second surface 242 can be prevented from being affected by the first shielding member 220/the second shielding member 230 formed on the second surface 242 of the substrate, thereby ensuring the radiation performance of the antenna device 200. On the other hand, the first electrical connection member 214 does not affect the shielding effect of the first shielding member 220/the second shielding member 230 on the intensity of the magnetic field generated by the second conductor section 212 under the action of the current.

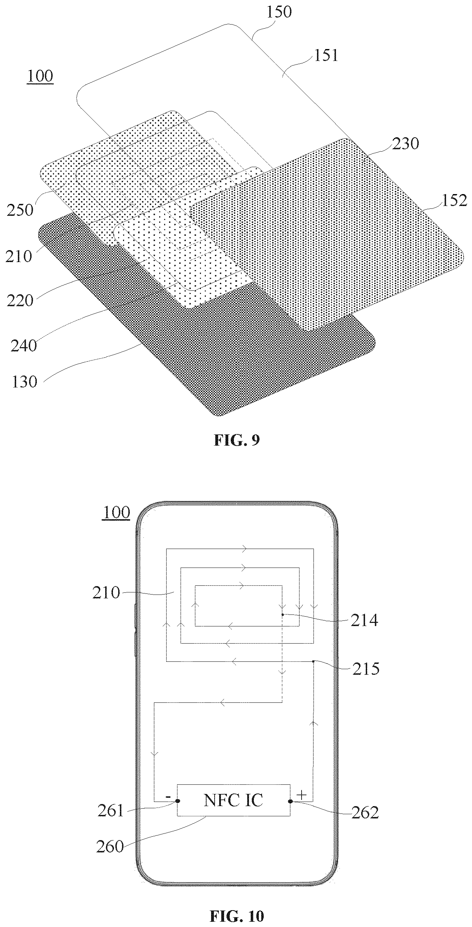

FIG. 9 is a second schematic structural diagram of an electronic device according to an embodiment of the present disclosure. Referring to FIG. 9, the rear housing 150 of the electronic device 100 may include a non-metal portion 151 and a metal portion 152. For example, the non-metal portion 151 may be disposed at an upper half of the rear housing 150, and the metal portion 152 may be disposed at a lower half of the rear housing 150.

An orthographic projection of the first conductor section 211 on the rear housing 150 may be located on the non-metal portion 151, enable the non-metal portion 151 not to block the transmission of the magnetic lines of force of the magnetic field generated by the first conductor section 211 in the free space.

It can be understood that the non-metal portion 151 may be a sheet material made of a non-metal material such as plastic and ceramic, and the non-metal portion 151 may be a region formed by a hollow structure such as a hole, a cavity, and a gap.

An orthographic projection of the second conductor section 212 on the rear housing 150 may be located on the metal portion 152. In this case, the metal portion 152 may form the first shielding member 220/the second shielding member 230. For example, as illustrated in FIG. 9, the second shielding member 230 is formed by the metal portion 152. The metal portion 152, as the shielding member, can shield transmission of the magnetic lines of force of the magnetic field generated by the second conductor section in the free space, thereby weakening an intensity of a magnetic field of a second coil.

In the electronic device 100 according to the embodiments of the present disclosure, by using the metal portion 152 on the rear housing 150 as the first shielding member 220/the second shielding member 230, the first shielding member 220/the second shielding member 230 does not additionally increase a thickness of the rear housing 150 of the electronic device 100, thereby further achieving the lightening and thinning of the electronic device 100.

It can be understood that, in the above solution, the rear housings 150, as a whole, can be a non-metal material to ensure radiation performance of the first conductor section 211. In this case, the first shielding member 220/the second shielding member 230 may be provided between the coil 210 and the rear housing 150 to shield the magnetic lines of force of the second conductor section 212.

It can be understood that various solutions of the embodiments of the present disclosure may be arbitrarily combined to form a new solution of an embodiment without conflict with each other, and the new solution of the embodiment shall also within the scope of the embodiments of the present disclosure. For example, the solutions in FIG. 8 and FIG. 9 may be combined in such a manner that the first shielding member 220 may be the metal plating layer on the second surface 242 of the substrate 240, and the second shielding member 230 may be a metal portion 152 of the rear housing 150.

Further referring to FIG. 9, the electronic device 100 according to the embodiment of the present disclosure may further include a magnetic member 250. The magnetic member 250 is disposed between the coil 210 and the circuit board 130. An orthographic projection of the magnetic member 250 on the coil 210 at least partially covers the first conductor section 211.

It can be understood that the magnetic member 250 may be a ferrite magnetic member. The magnetic member 250 may also be a material having an electrical resistivity far greater than that of metal, alloy magnetic material and a material with high dielectric properties.

In the electronic device 100 according to the embodiments of the present disclosure, when the coil 210 is electrically connected to the circuit board 130 to transmit a wireless signal, the circuit board 130 or a metal device on the circuit board 130 may generate an induced eddy current reverse to a transmission direction of the coil 210. The induced eddy current may inhibit an intensity of the magnetic field of the coil 210, thereby affecting the radiation performance of the antenna device 200. In the electronic device 100 according to the embodiments of the present disclosure, by providing one magnetic member 250 between the coil 210 and the circuit board 130, the magnetic member 250 can limit the magnetic lines of force generated by the coil 210 to the magnetic member 250, and thus the magnetic lines of force generated by the coil 210 cannot reach the circuit board 130. Therefore, a substrate of the circuit board 130 generates no reverse induced eddy current. The magnetic member 250 can inhibit generation of the induced eddy current, thereby preventing the radiation performance of the antenna device 200 from being affected by the induced eddy current.

Based on a structure of the antenna device 200, the electronic device 100 in the embodiments of the present disclosure may further include a communication chip. FIG. 10 is a third schematic structural diagram of an electronic device according to an embodiment of the present disclosure. Referring to FIG. 10, the communication chip may be Near-Field Communication chip (NFC IC) 260. The coil 210 may be electrically connected to the NFC IC 260, enabling the coil 210 to transmit an NFC signal.

The NFC IC 260 can be configured to provide the NFC signal. That is, the NFC IC 22 can be configured to provide a differential excitation current. The differential excitation current includes two current signals. These two current signals have a same amplitude and opposite phases, or it can be understood that the phases of the two current signals differ by 180 degrees. In addition, the differential excitation current is a balanced signal. It can be understood that in the process of transmission of an analog signal, if the analog signal is directly transmitted, it is an unbalanced signal; if the phase of the original analog signal is inverted and then the inverted analog signal and the original analog signal are transmitted simultaneously, the inverted analog signal and the original analog signal are referred to as the balanced signal. The balanced signal passes through a differential amplifier in the transmission process, and the original analog signal and the inverted analog signal are subjected to a subtraction process to obtain an enhanced original analog signal. Since the two transmission lines are subjected to the same interference in the transmission process, and the same interference signal can be removed in the subtraction process, the balanced signal has a better anti-interference performance.

It can be understood that the NFC IC 260 may include a first differential signal terminal 261 and a second differential signal terminal 262. The first differential signal terminal 261 and the second differential signal terminal 262 can be configured to provide the differential excitation current. The first differential signal terminal 261 may be directly or indirectly electrically connected to an electrical connection member of the coil 210. The second differential signal terminal 262 may also be directly or indirectly electrically connected to another electrical connection member of the coil 210. Further, the coil 210 can transmit the differential excitation current.

For example, as illustrated in FIG. 10, the first differential signal terminal 261 of the NFC IC 260 is electrically connected to the first electrical connection member 214 of the coil 210, and the second differential signal terminal 262 is electrically connected to the second electrical connection member 215. In this case, the NFC IC 260 and the coil 210 can form a signal loop to transmit the differential excitation current.

For another example, one or more conductors may be connected in series between the first differential signal terminal 261 of the NFC IC 260 and the first electrical connection member 214 of the coil 210, such that the first differential signal terminal 261 is indirectly electrically connected to the first electrical connection member 214 of the coil 210. Similarly, one or more conductors may also be connected in series between the second differential signal terminal 262 of the NFC IC 260 and the second electrical connection member 215 of the coil 210, such that the second differential signal terminal 262 is indirectly electrically connected to the second electrical connection member 215 of the coil 210.

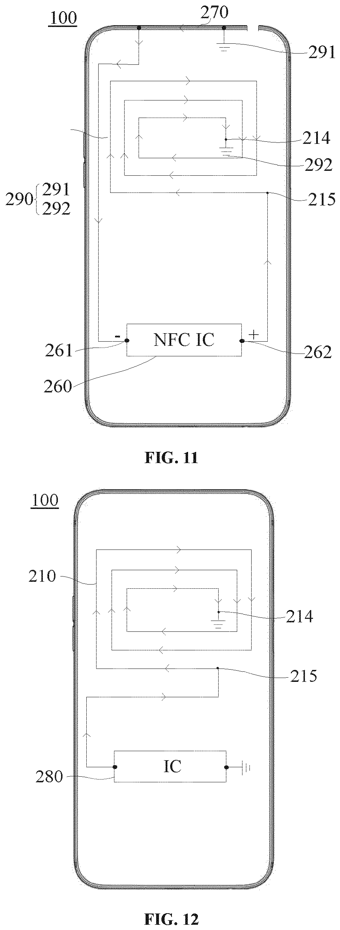

FIG. 11 is a fourth schematic structural diagram of an electronic device according to an embodiment of the present disclosure. For example, referring to FIG. 11, the electronic device 100 according to the embodiment of the present disclosure may further include a radiator 270 and a ground plane 290. The ground plane 290 includes a first ground portion 291 and a second ground portion 292 that are spaced apart from each other, and a conductive path is defined between the first ground portion 291 and the second ground portion 292. The radiator 270 has an end directly or indirectly electrically connected to one differential signal terminal of the NFC IC 260, and another end directly or indirectly electrically connected to the coil 210.

For example, as illustrated in FIG. 10, one end of the radiator 270 is electrically connected to the first differential signal terminal 261 of the NFC IC 260, and another end of the radiator 270 is grounded, for example, electrically connected to the first ground portion 291. The first electrical connection member 214 of the coil 210 may also be grounded, for example, electrically connected to the second ground portion 292. The second electrical connection member 215 of the coil 210 may be electrically connected to the second differential signal terminal 262 of the NFC IC 260. Thus, conductive paths of the NFC IC 260, the coil 210, the radiator 270, and the ground plane 290 may define a conductive loop and transmit the differential excitation current.

It can be understood that, in the above embodiments, another end of the radiator 270 may also be directly electrically connected to the first electrical connection member 214 of the coil 210, not via the ground plane 290.

It can be understood that the radiator 270 may be a free metal branch on the middle frame 120 of the electronic device 100, a radiator on the circuit board 130 of the electronic device 100, or a radiator defined by other conducting bodies on the electronic device 100. A specific form of the radiator 270 is not limited in the embodiments of the present disclosure.

It can be understood that the electronic device in the embodiments of the present disclosure may include one radiator 270, or a plurality of radiators 270 connected in series/in parallel between the NFC IC 260 and the coil 210 to increase a radiation area

In the electronic device according to the embodiments of the present disclosure, when one or more conductors are connected in series between the first differential signal terminal 261 and the first electrical connection member 214 and/or between the second differential signal terminal and the second electrical connection member 215, a common antenna can be formed by the conductor and the coil 210. Under the action of the differential excitation current, the coil 210 may form an NFC radiation field, and the conductor may form another NFC radiation field. Therefore, under the action of the two NFC radiation fields, the radiation area of the antenna device 200 can be increased, thereby further improving the radiation performance of the antenna device 200.

FIG. 12 is a fifth schematic structural diagram of an electronic device according to an embodiment of the present disclosure. Referring to FIG. 12, the communication chip may also be a non-near-field communication chip. The non-near-field communication chip may be an IC chip. The non-near-field communication chip (IC) 280 can be configured to provide a non-near-field communication signal. The coil 210 may be electrically connected to the non-near-field communication chip (IC) 280, enabling the coil 210 to transmit the non-near-field communication signal

It can be understood that the non-near-field communication signal may be an unbalanced signal, including but not limited to, a cellular network signal, a Wireless Fidelity (Wi-Fi) signal, a Global Positioning System (GPS) signal, a Bluetooth (BT) signal. Correspondingly, the non-near-field communication chip (IC) 280 may be a cellular communication chip for providing the cellular network signal, a Wi-Fi chip for providing the Wi-Fi signal, a GPS chip for providing the GPS signal, or a BT chip for providing the BT signal.

It can be understood that the non-near-field communication chip (IC) 280 may be electrically connected to an electrical connection portion of the coil 210, for example, the first electrical connection member 214. In this case, the second electrical connection member 215 of the coil 210 may be grounded to transmit the non-near-field communication signal.

It can be understood that the above are merely examples of the electronic device 100. According to the embodiments of the present disclosure, the electronic device 100 may further include components such as a camera, a sensor, and an acoustoelectric conversion device, and these components may refer to the description in the related art, which are not described in detail herein.

The antenna device and the electronic device according to the embodiments of the present disclosure are described in detail above. The principles and implementations of the present disclosure are described herein by using specific examples, and the descriptions of the above embodiments are only used to help the understanding of the present disclosure. At the same time, those skilled in the art can make modification to the specific embodiments and application scope based on the concept of the present disclosure. To sum up, the content of this specification should not be construed as limitations on the present disclosure.

## Claims

1. An antenna device, comprising:
a coil at least comprising a first conductor section and a second conductor section that are opposite to each other, a transmission direction of a current in the first conductor section being reverse to a transmission direction of the current in the second conductor section; and
a first shielding member disposed on a first side of the coil, an orthographic projection of the first shielding member on the coil at least partially covering the second conductor section to weaken an intensity of a magnetic field generated by the second conductor section under the action of the current.

2. The antenna device according to claim 1, further comprising:
a second shielding member disposed on a second side of the coil, the second side being opposite to the first side, an orthographic projection of the second shielding member on the coil at least partially covering the second conductor section to weaken the intensity of the magnetic field generated by the second conductor section under the action of the current.

3. The antenna device according to claim 1, wherein a radial width of the second conductor section is different from a radial width of the first conductor section.

4. The antenna device according to claim 1, further comprising a substrate, the substrate having a first surface and a second surface that are opposite to each other, wherein:
the first conductor section and the second conductor section are arranged on the first surface; and
the second surface comprises a metal layer forming the first shielding member.

5. The antenna device according to claim 4, wherein the substrate further comprises at least two via holes spaced apart from each other, each of the via holes penetrating the first surface and the second surface; and
wherein the antenna device further comprises:
a first electrical connection member having an end electrically connected to one free end of the coil, and another end successively passing through the via holes and being disposed on the first surface; and
a second electrical connection member having an end electrically connected to another free end of the coil, and another end disposed on the first surface.

6. The antenna device according to claim 5, wherein a portion of the first electrical connection member disposed on the second surface and the first shielding member are staggered to each other.

7. The antenna device according to claim 1, wherein a central region is defined between the first conductor section and the second conductor section, the central region having a width between 2 mm and 10 mm.

8. The antenna device according to claim 1, further comprising:
a near-field communication chip having a first differential signal terminal and a second differential signal terminal, the first differential signal terminal and the second differential signal terminal being configured to provide a differential excitation current;
a ground plane having a first ground portion and a second ground portion that are spaced apart from each other, the ground plane defining a conductive path between the first ground portion and the second ground portion; and
a radiator having an end electrically connected to the first ground portion, and another end electrically connected to the first differential signal terminal,
wherein the coil has an end electrically connected to the second ground portion and another end electrically connected to the second differential signal terminal,
wherein a conductive loop for transmitting the differential excitation current is formed by the radiator, the conductive path, and the coil.

9. The antenna device according to claim 1, further comprising a non-near-field communication chip configured to provide a non-near-field communication excitation signal, wherein the coil is electrically connected to the non-near-field communication chip and configured to transmit the non-near-field communication excitation signal.

10. An electronic device, comprising:
an antenna device comprising:
a coil at least comprising a first conductor section and a second conductor section that are opposite to each other, a transmission direction of a current in the first conductor section being reverse to a transmission direction of the current in the second conductor section; and
a first shielding member disposed on a first side of the coil, an orthographic projection of the first shielding member on the coil at least partially covering the second conductor section to weaken an intensity of a magnetic field generated by the second conductor section under the action of the current; and
a circuit board located on a side of the first shielding member facing away from the coil and having a signal source disposed thereon, the signal source being electrically connected to the coil to enable the coil to transmit a wireless signal.

11. The electronic device according to claim 10, wherein:
the antenna device further comprises a second shielding member disposed on a second side of the coil, the second side being opposite to the first side, an orthographic projection of the second shielding member on the coil at least partially covering the second conductor section to weaken the intensity of the magnetic field generated by the second conductor section under the action of the current; and
the electronic device further comprises a rear housing having a metal portion, an orthographic projection of the second conductor section on the rear housing being at least partially located in the metal portion, and the metal portion forming the second shielding member.

12. The electronic device according to claim 11, wherein the rear housing further has a non-metal portion, an orthographic projection of the first conductor section on the rear housing being at least partially located in the non-metal portion.

13. The electronic device according to claim 10, further comprising:
a magnetic member disposed between the coil and the circuit board, an orthographic projection of the magnetic member on the coil at least partially covering the first conductor section.

14. The electronic device according to claim 10, wherein a radial width of the second conductor section is different from a radial width of the first conductor section.

15. The electronic device according to claim 10, further comprising a substrate, the substrate having a first surface and a second surface that are opposite to each other, wherein:
the first conductor section and the second conductor section are arranged on the first surface; and
the second surface comprises a metal layer forming the first shielding member.

16. The electronic device according to claim 15, wherein the substrate further comprises at least two via holes spaced apart from each other, each of the via holes penetrating the first surface and the second surface; and
wherein the antenna device further comprises:
a first electrical connection member having an end electrically connected to one free end of the coil, and another end successively passing through the via holes and being disposed on the first surface; and
a second electrical connection member having an end electrically connected to another free end of the coil, and another end disposed on the first surface.

17. The electronic device according to claim 16, wherein a portion of the first electrical connection member disposed on the second surface and the first shielding member are staggered to each other.

18. The electronic device according to claim 10, wherein a central region is defined between the first conductor section and the second conductor section, the central region having a width between 2 mm and 10 mm.

19. The electronic device according to claim 10, further comprising:
a near-field communication chip having a first differential signal terminal and a second differential signal terminal, the first differential signal terminal and the second differential signal terminal being configured to provide a differential excitation current;
a ground plane having a first ground portion and a second ground portion that are spaced apart from each other, the ground plane defining a conductive path between the first ground portion and the second ground portion; and
a radiator having an end electrically connected to the first ground portion, and another end electrically connected to the first differential signal terminal,
wherein the coil has an end electrically connected to the second ground portion and another end electrically connected to the second differential signal terminal,
wherein a conductive loop for transmitting the differential excitation current is formed by the radiator, the conductive path, and the coil.

20. The electronic device according to claim 10, further comprising a non-near-field communication chip configured to provide a non-near-field communication excitation signal, wherein the coil is electrically connected to the non-near-field communication chip and configured to transmit the non-near-field communication excitation signal.
